# EUROPÄISCHE PATENTSCHRIFT

(11) **EP 3 727 672 B1**
(45) Veröffentlichungstag und Bekanntmachung des Hinweises auf die Patenterteilung: **17.05.2023**
(21) Anmeldenummer: 18826030.1
(22) Anmeldetag: 20.12.2018
(51) Int. Cl.: B01J 19/00

(54) **REAKTORSYSTEM UND VERFAHREN FÜR DURCHFLUSSREAKTIONEN**
REACTOR SYSTEM AND PROCESS FOR FLOW-THROUGH REACTIONS
SYSTÈME DE RÉACTEUR ET PROCÉDÉ POUR LES RÉACTIONS À FLUX CONTINU

(30) Priorität: 21.12.2017 EP 17209710
(43) Veröffentlichungstag der Anmeldung: 28.10.2020
(73) Patentinhaber: HTE GmbH The High Throughput Experimentation Company, 69123 Heidelberg (DE)
(72) Erfinder: SCHUNK, Stephan A, 69123 Heidelberg (DE); MORMUL, Jaroslaw Michael, 67056 Ludwigshafen (DE); GUELLICH, Frank, 69123 Heidelberg (DE); KOECHEL, Oliver, 69123 Heidelberg (DE); DEJMEK, Michael, 69123 Heidelberg (DE)
(74) Vertreter: BASF IP Association
(86) Internationale Anmeldenummer: PCT/EP2018/086152
(87) Internationale Veröffentlichungsnummer: WO 2019/122101

(56) Entgegenhaltungen:
- EP-A2- 1 329 258
- WO-A1-2004/030805
- WO-A1-2008/062896
- WO-A2-00/51720
- WO-A2-00/51720
- WO-A2-2010/130811
- CN-A- 104 671 204
- JP-A- 2005 087 803

## Beschreibung

Die Erfindung betrifft ein Reaktorsystem für Durchflussreaktionen, das zumindest zwei Blöcke (1, 2), zwei Zwischenschichten (8, 9) und eine Anpressvorrichtung sowie zumindest eine Zuleitung (10) und eine Ableitung (11) umfasst, wobei der erste Block (1), die Zwischenschichten (8, 9) und der zweite Block (2) eine stapelförmige mit der Anpressvorrichtung fixierte Anordnung bilden und das Reaktorsystem dadurch gekennzeichnet ist, dass zumindest eine Zwischenschicht eine Dichtungsschicht (8) und eine Zwischenschicht einen Reaktionskanal enthaltendes Kanalstrukturelement (9) umfasst, wobei die Zuleitung (10) mit der Eingangsseite des Reaktionskanals und die Ableitung (11) mit der Ausgangs-seite des Reaktionskanals in Wirkverbindung stehen und die stapelförmige Anordnung lösbar ist.

Die Entwicklung und die Optimierung von Reaktorsystemen für Durchflussreaktionen sind von großem technischem Interesse. Mittels des Reaktorsystems werden Daten generiert, die es ermöglichen sollen, eine gezielte Vorhersage darüber zu machen, wie sich großtechnische Prozesse nachstellen lassen. Die Verbesserung der Genauigkeit von Reaktionssystemen ist hilfreich, um neue großtechnische Prozesse zu entwickeln beziehungsweise bestehende großtechnische Prozesse noch weiter zu verbessern. Die Prozessentwicklung ist auf die Einsparung von Energie und Ressourcen gerichtet, um hierdurch zur Verringerung des Kohlendioxidausstoßes beizutragen.

Die Reaktorsysteme, die im Laborbereich eingesetzt werden, haben eine zentrale Bedeutung bei der Forschung und Entwicklung. In der Fachliteratur und in Patentschriften werden zahlreiche Darstellungen zu unterschiedlichen Reaktoren oder Mikroreaktoren gegeben, die für Forschungszwecke im Laborbereich eingesetzt werden. Die für Forschungszwecke im Laborbereich eingesetzten Reaktoren sind dadurch gekennzeichnet, dass diese geringen Abmessungen, das Volumen der Reaktionsräume ist oftmals kleiner als 10 mL, aufweisen und diese mit geringen Mengen an Chemikalien betrieben werden. Im nachfolgenden Teil wird eine kurze Zusammenfassung zu den unterschiedlichen Reaktoren beziehungsweise Mikroreaktoren gegeben, die im Stand der Technik offenbart wurden.

In der EP-Anmeldung EP 2 113 558 A2 beschreiben Y. Asano et al. einen Mikroreaktor, der aus Platten aufgebaut ist, in denen Kanäle angeordnet sind. Von Asano et al. wird ein Reaktor offenbart und beansprucht, bei dem sich das Oberflächen-zu-Volumen-Verhältnis innerhalb eines Reaktionskanals ändert. Gemäß dem von Asano offenbarten Reaktor ist es bevorzugt, wenn das Oberflächen-zu-Volumen-Verhältnis stromaufwärts größer ist als stromabwärts.

In dem US-Patent US 7,534,402 B2 beschreiben J.D. Morse et al. einen Mikroreaktor zur Herstellung von Wasserstoff als Brennstoff. Ein Aspekt der Erfindung betrifft auch eine Membranfläche, die in den Mikroreaktor integriert ist und mit deren Hilfe der in dem Mikroreaktor erzeugt Wasserstoff abgetrennt wird.

In dem US-Patent US 7,678,361 B2 beschreiben G. Markows et al. einen Mikroreaktor, bei dem die Kanäle in Platten angeordnet sind. Es werden stapelförmige Anordnungen von Reaktionskanälen und Wärmeträgerfluid beschrieben. Ein Aspekt des Mikroreaktors ist, dass die Kanäle beschichtet werden können. Durch den direkten Kontakt der Reaktionskanäle mit benachbarten Kanälen mit dem Wärmeträgerfluid kann die Reaktionstemperatur innerhalb der Reaktionskanäle sehr genau kontrolliert werden.

In der US-Patentanmeldung US 2007/0161834 A1 beschreiben Kobayashi et al. einen Mikroreaktor, bei dem die Kanäle auf einem Substrat vorliegen. Der Katalysator liegt geträgert auf einer Oberfläche der Kanalwände vor. Hierbei ist der Katalysator in ein Polymer inkorporiert. Die Erfindung bezieht sich auf ein Verfahren, bei dem Gas und Flüssigkeit durch den Reaktionskanal geführt werden und es zu einer Reaktion kommt, die durch den Feststoffkatalysator katalysiert wird, der in das Polymer inkorporiert ist.

In der PCT-Anmeldung WO 2004/022233 A1 beschreiben Summersgill ein modulares mikrofluidisches System. Das modulare mikrofluidische System weist unterschiedliche Baugruppen auf, die eine Basisplatte umfassen. An die Basisplatte können unterschiedliche mikrofluidische Module lösbar angebunden werden, wobei einzelne Komponenten einen chipartigen Aufbau aufweisen können.

Ein weiteres Mikroreaktorsystem wird in der PCT-Anmeldung WO 2007/112945 A1 von Roberge et al. beschrieben. Bei dem Mikroreaktorsystem handelt es sich um eine stapelförmige Anordnung von Prozessmodulen, die Zwischenmodule als Wärmetauschermodule aufweisen. Mittels der Wärmetauschermodule werden die benachbarten Platten beheizt oder gekühlt. Die Wärmetauschermodule in den unterschiedlichen Scheiben weisen eine gemeinsame Wärmefluidzufuhr und Wärmefluidabfuhr auf. Innerhalb des Stapels wird das Wärmefluid auch durch die Platten mit den Reaktionskanälen transportiert.

In der PCT-Anmeldung WO 2012/025224 A1 wird von C. Stemmert ein mikrofluidischer Apparat beschrieben, der aus stapelförmig angeordneten Platten aufgebaut ist. Die Platte mit den mikrofluidischen Kanälen ist von Platten umfasst, die als Wärmetauscher fungieren.

Im EP-Patent EP 1 031 375 B1 wird von S. Oberbeck et al. ein Mikroreaktor zur Durchführung von chemischen Reaktionen offenbart und beansprucht, wobei der Mikroreaktor horizontale Reaktionsräume aufweist, die übereinander gestapelt werden. Dabei werden die Abdichtzonen der Platten oder Schichten durch ausreichenden Flächenpressdruck dichtend auf einander gepresst. Es wird dargestellt, dass der Stapel unterschiedliche Funktionsmodule aufweist und der Stapel der Funktionsmodule von einem Gehäuse umschlossen wird, welches Anschlüsse für die Zufuhr und die Abfuhr aufweist.

Darüber hinaus wird in der PCT-Anmeldung WO 2015/087354 A2 von A.A. Kulkarni ein Mikroreaktor beschrieben, der aus Metall aufgebaut ist, wobei die Reaktionskanäle mit Glas ausgekleidet sind. Der Metallreaktor ist eingefasst von Metallringen.

Weiterhin ist als Stand der Technik auch die WO 00/51720 A zu nennen, in der ein Hochdurchsatzmikroreaktor zur Testung von Katalysatoren offenbart wird. Bei dem Hochdurchsatzmikroreaktor handelt es sich um ein Mikroprozesssystem, das eine Vielzahl von aneinander liegenden Schichten aufweist, wobei in den einzelnen Schichten kavitätsartige Reaktionsräume enthalten sind, die untereinander entkoppelt sind. Die Reaktionsräume sind an ein Fluidverteilungssystem und Fluidableitungen angeschlossen. Dadurch lassen sich den Reaktionsräumen Fluide zuführen und Abflüsse können abgeleitet werden.

In der EP 1 329 258 A2 wird ein Mikroreaktor für Reaktionen mit flüchtigem oder gasförmigem Produkt offenbart und beansprucht. Beansprucht wird ein Mikroreaktor, der dadurch gekennzeichnet ist, dass eine flüssige Phase in mindestens einem Kapillarfaden entlang einer Oberfläche mindestens einer Platte oder Schicht fließt und die in der flüssigen Phase enthaltenen gasförmigen und/oder flüchtigen Bestandteile kontinuierlich aus der flüssigen Phase austreten.

Die WO 2010/130811 offenbart einen Mikroreaktor, der aus einem Plattenstapel mit gewundenen Kanälen gebildet wird, die mittels eines Anpressverschlusses gegeneinandergedrückt beziehungsweise verpresst werden. Mittels der Erfindung wird ein Verfahren zur Herstellung eines Zielreaktors mit einem Strömungskanalsystem bereitgestellt. In den Zielreaktor können eine Vielzahl von Reaktanten, die kontinuierlich in den Zielreaktor strömen, vermischt und ineinander umgewandelt werden. Durch speziell ausgewählte Kanalstrukturen umfasst der Reaktor Bereiche mit turbulenten oder übergangsturbulenten Strömungen, wobei wiederholt die umgelenkte Strömung zu einer effizienten Strömungsvermischung führt.

In der CN 104 671 204 wird ein Mikroreaktor für Produktionsprozesse zur Reformierung beschrieben. In de CN 104 671 204 wird ein Mikroreaktor zur Produktion von Wasserstoff auf der Basis eines alkoholhaltigen Brennstoffs offenbart. Durch eine doppelseitige oder mehrschichtige Anordnung von Mikrokanälen kann die Produktionsleistung des erfindungsgemäßen Mikroreaktors erhöht werden. Auf jeder Seite sind die Mikrokanäle serpentinenförmig angeordnet, wobei auch immer mehrere Kanäle parallel angeordnet sind. In einer bevorzugten Ausführungsform ändert sich der Durchmesser der einzelnen Mikrokanäle dahingehend, dass diese im Eingangsbereich einen engeren Durchmesser aufweisen als im Ausgangsbereich der Mikrokanäle. Dies führt dazu, dass der Abfall des Drucks bzw. die Druckänderung reduziert werden kann. Die doppelseitigen Platten, die die Mikrokanäle enthalten sind Teil einer kompakten Baueinheit mit weiteren Bauelementen. Zu diesen Bauelementen gehört eine Zuleitung mit einer Verdampfungskammer, Halterungsplatten, Verteilerkammer, Dichtungselemente und ein Verschlusssystem.

In der WO2004/030805 wird ein chemischer Mikroreaktor zur Erzeugung von Wasserstoff aus flüssigen Quellen. Dabei kann es sich um Ammoniak, Methanol und Butan handeln, die durch Dampfreformierungsprozess in Gegenwart von Wasser umgesetzt werden. Der Mikroreaktor enthält Kapillarmikrokanäle mit integrierten Widerstandsheizungen, um die katalytische Dampfreformierungsreaktionen durch eine sehr gut kontrollierte thermische Beheizung zu unterstützen. In der WO2004/030805 werden zwei unterschiedliche Ausführungsformen des Mikroreaktors diskutiert. Die eine Ausführungsform ist dadurch gekennzeichnet, dass die Mikrokanäle mit einer Katalysatorpackung befüllt sind und mindestens eine poröse Membran aufweisen. In einer weiteren Ausführungsform ist umfassen die Kanäle eine poröse Membran mit einer großen Oberfläche oder eine poröse Membranträgerstruktur.

In der WO2008/062896 wird ein Mikroreaktor zur Reformierung von Brennstoffen beschrieben. Der Reaktor weist eine elektrisch beheizbare Schicht auf, auf die ein Katalysator laminiert wird.

In der JP 2005/087803 wird ein katalytischer Reaktor beschrieben, der in der Lage ist, die Heizzeiten zu verkürzen, die erforderlich ist, den Katalysator zu einer gewünschten Temperatur zu heizen. Eine elektrische Heizschicht beziehungsweise eine elektrische Heizschicht wird im Teil der Einlassung gebildet und ein Katalysatorfilm beziehungsweise eine Katalysatorschicht wird laminiert auf die Heizschicht. Die Begriffe elektrische Heizschicht bezieht sich auf eine fest laminierte Anordnung, die nicht in Kontakt mit der Dichtung ist.

Eine der Aufgaben, die der Erfindung zugrunde liegt, ist es, einen Reaktor bereitzustellen, der eine gute Handhabbarkeit aufweist. Der Reaktor soll unter anderem dazu geeignet sein, dass dieser auch in Anwesenheit von Feststoffkatalysatoren betrieben werden kann. Der Reaktor solle unter Betriebsbedingungen bei hohem Druck einsetzbar sein. Darüber hinaus war es auch gewünscht, dass der Katalysatorwechsel schnell und mit wenig Aufwand bewerkstelligt werden kann.

Die vorliegend genannten Aufgaben sowie auch weitere Aufgaben konnten dadurch gelöst werden, dass ein Reaktorsystem für Durchflussreaktionen bereitgestellt wird, das zumindest zwei Blöcke (1, 2), zwei Zwischenschichten (8, 9) und eine Anpressvorrichtung sowie zumindest eine Zuleitung (10) und eine Ableitung (11) umfasst, wobei der erste Block (1), die Zwischenschichten (8, 9) und der zweite Block (2) eine stapelförmige mit der Anpressvorrichtung fixierte Anordnung bilden und das Reaktorsystem dadurch gekennzeichnet ist, dass zumindest eine Zwischenschicht eine Dichtungsschicht (8) und eine Zwischenschicht einen Reaktionskanal enthaltendes Kanalstrukturelement (9) umfasst, und zwischen der Dichtungsschicht (8) und dem Kanalstrukturelement (9) eine Katalysatorfolie (15) angeordnet ist, wobei der Reaktionskanal des Kanalstrukturelements (9) meanderförmig verläuft und der Durchmesser des Reaktionskanals im Bereich von 50 - 2500 µm und die Tiefe des Reaktionskanals im Bereich von 10 - 1500 µm liegen und wobei die Zuleitung (10) mit der Eingangsseite des Reaktionskanals und die Ableitung (11) mit der Ausgangsseite des Reaktionskanals in Wirkverbindung stehen und die stapelförmige Anordnung lösbar ist.

Die lösbare Verbindung der Vorrichtungselemente ist von Vorteil, da sich das Reaktorsystem in einfacher Weise montieren und demontieren lässt und auch mehrfach verwendet werden kann.

Hierdurch ist es möglich, die mittels des Reaktorsystems untersuchten Katalysatoren und/oder Katalysatorfolien nach der Durchführung der katalytischen Testreaktion einer visuellen und/oder analytischen Charakterisierung unterziehen - ohne dass diese dabei in der Form verändert werden. Eine Ausführungsform des erfindungsgemäßen Reaktorsystems in Verbindung mit den Katalysatorfolien ist besonders vorteilhaft, da diese auch die Möglichkeit bietet, grundlegende Experimente durchzuführen, die darauf abzielen, Veränderungen des Katalysatormateriales analytisch zu fassen.

In einer bevorzugten Ausführungsform ist das Reaktorsystem dadurch gekennzeichnet, dass einer der Blöcke auf der Seite, auf welcher der Kontakt mit dem Gegenblock besteht, eine Erhöhung bzw. Sockel mit ebener Endfläche und einer der Blöcke auf der Seite, auf der der Kontakt mit dem Gegenblock besteht, eine Vertiefung mit flachem Boden aufweist und beim Vorliegen der stapelförmigen Anordnung die Erhöhung bzw. der Sockel in der Vertiefung positioniert ist und die Zwischenschichten (8, 9) im Bereich zwischen der Endfläche des Sockels und des Bodens der Vertiefung angeordnet sind. Somit ist es bevorzugt, dass der eine Block die Form einer Patritze (Stempel) mit einer Erhebung und der andere Block die Form einer Matrize mit einer Vertiefung zur Aufnahme der Erhebung aufweist, wobei es bevorzugt ist, dass die Erhebung beziehungsweise die Vertiefung eine ebene Abschlussfläche aufweisen. Vorzugsweise wird das Kanalstrukturelement (9) in der Vertiefung positioniert. Der Vorteil, aus der komplementären Anordnung der Formen der Blöcke (1) und (2) auf der Seite der Kontaktfläche resultiert, ist dadurch gegeben, dass der Stempel beim Zusammendrücken der Blöcke sehr gut in der Vertiefung fixiert werden kann, da diese eine Führung darstellt.

Es sind auch Ausführungsformen denkbar, bei denen die ebenen Flächen durch anders ausgeformte Dichtungskörper ersetzt werden, die beispielsweise eine gewölbte (oder erhabene) Dichtfläche, eine kantige oder eine halbkreisförmige Kontur aufweisen. Derartige Ausführungsformen ermöglichen eine starke lokale Pressung, die gegenüber planparallelen Dichtflächen eine deutlich niedrigere Presskraft für eine Dichtwirkung erfordert.

Weiterhin ist es auch bevorzugt, dass der Sockel mit der ebenen Endfläche als zylinderförmige Scheibe ausgestaltet und die Vertiefung mit dem flachen Boden als zylinderförmiges Loch ausgestaltet sind.

Das erfindungsgemäße Reaktorsystem bietet den Vorteil, dass die Bauelemente des Reaktorsystems in einfacher Weise ausgetauscht werden können. Beispielsweise können unterschiedliche Kanalstrukturelemente (9) in variabler Weise eingesetzt werden. Die unterschiedlichen Kanalstrukturelemente (9) können sich beispielsweise bezüglich der Größe, der Auslegung der Reaktionskanäle oder in Bezug auf das Material unterscheiden, aus dem diese gefertigt wurden.

In einer weiteren Ausführungsform ist das Reaktorsystem dadurch gekennzeichnet, dass zumindest eine Kanalstrukturelement (9) umfassende Zwischenschicht einen integralen Bestandteil der Kontaktfläche eines der Blöcke bildet oder das jeweils eine Zwischenschicht, die als Kanalstrukturelement (9) ausgeformt ist, integrale Bestandteile der Kontaktseiten der jeweiligen Blöcke bilden. (Es ist bevorzugt, dass die Anpressvorrichtung Schrauben umfasst, die seitlich im Randbereich der Blöcke angeordnet sind. Vorzugsweise umfasst die Anpressvorrichtung zumindest vier Schrauben.)

In Bezug auf Dimensionierung des Reaktorsystems ist festzustellen, dass eine Ausführungsform bevorzugt ist, bei der die Zwischenschichten einen Durchmesser aufweisen, der im Bereich von 0,5 - 200 cm liegt, weiter vorzugsweise ist der Durchmesse der Zwischenschichten im Bereich von 1 - 50 cm darüber hinaus bevorzugt im Bereich von 1,5 - 15 cm.

Die Flexibilität des erfindungsgemäßen Reaktorsystems ist von Vorteil, da hierdurch vielseitige Einsatzmöglichkeiten gegeben sind, so dass das Reaktorsystem im Forschungs- und Entwicklungsbereich oder auch im Produktionsbereich eingesetzt werden kann. In der Ausführungsform zur Nutzung im Produktionsbereich weist das Reaktorsystem Abmessungen auf, die größer sind als die Abmessungen für die Verwendung des Reaktorsystems im Forschungs- und Entwicklungsbereich. Der Einsatz des erfindungsgemäßen Reaktorsystems im Produktionsbereich bietet die Vorteile, die durch die Mikroreaktortechnologie gegenüber klassischen Reaktoren gegeben sind. Zu diesen Vorteilen gehören, dass die Reaktanden besser durchmischt und unter sehr gut kontrollierten Bedingungen zur Reaktion gebracht werden können. Dies gilt insbesondere in Bezug auf die Kontrolle der Temperatur und der Verweilzeit, wobei die Genauigkeit bei der Temperaturkontrolle vorzugsweise durch Temperaturschwankungen von kleiner oder gleich +/- 2,5 °C gekennzeichnet sind, weiter vorzugsweise ist die Temperaturschwankung kleiner oder gleich +/- 1,5 °C, darüber hinaus bevorzugt ist die Temperaturschwankung kleiner +/-0,5 C°. Vorzugsweise wird die Verweilzeit mit einer Genauigkeit kontrolliert, bei der die Schwankungen kleiner oder gleich +/- 15 s, weiter vorzugsweise sind die Schwankungen kleiner oder gleich +/- 10 s, insbesondere bevorzugt ist Kontrolle Verweilzeit so, dass die Schwankungen kleiner oder gleich +/- 5 s. Die Verweilzeit entspricht dem Quotienten des Volumens des Reaktionsraums zum austretenden Volumenstrom. Im Forschungs- und Entwicklungsbereich ist ein besonderer Vorteil dadurch gegeben, dass die Elemente des Reaktorsystems sowie der Katalysator nach der Durchführung des Verfahrens einer analytischen Charakterisierung unterzogen werden können. Kanalstrukturelemente können aus unterschiedlichen Materialien hergestellt und getestet werden, um die chemische Resistenz hinsichtlich der in dem Reaktor durchgeführten Untersuchungen zu bewerten. Dadurch lassen sich Erkenntnisse darüber gewinnen, wie ein großtechnischer Reaktor auszulegen ist, damit dieser korrosionsbeständig betrieben werden kann.

Vorzugsweise wird das erfindungsgemäße Reaktorsystem in einer Ausführungsform betrieben, bei der das Kanalstrukturelement (9) in Kontakt mit einem Katalysatorfilm steht. Ein vorteilhafter Aspekt dieser Konfiguration ist auch, dass der Katalysatorfilm nach dem Abschluss der chemischen Untersuchung zerstörungsfrei aus dem Reaktorsystem ausgebaut und einer analytischen Charakterisierung unterzogen werden kann. Mittels dieser analytischen Charakterisierung des gealterten Katalysatorfilms lassen sich Erkenntnisse über die Wechselbeziehung zwischen der Struktur des Katalysatormaterials und der bei den Experimenten beobachteten Reaktionsaktivität herausfinden. Denkbar ist auch eine Ausführungsform des Reaktorsystems, bei der ein Bereich des Reaktionskanals mit einer Messsonde in Wirkverbindung steht, die es ermöglicht, online-spektroskopische Untersuchungen an den Produktströmen oder dem Katalysatorfilm während der Durchführung des chemischen Prozesses vorzunehmen. Eine derartige Ausführungsform wäre dadurch gegeben, dass die Messsonde in einen der Blöcke (1, 2) angeordnet ist, die das Kanalstrukturelement (9) und das Dichtungselement (8) umschließen.

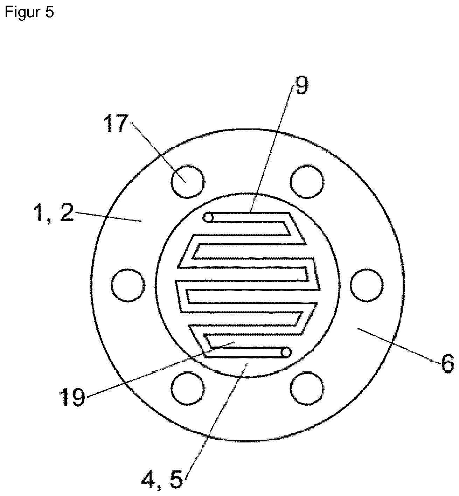

Der Begriff "Anpressvorrichtung" im Sinne der vorliegenden Beschreibung bedeutet, dass Elemente eingesetzt werden, die eine hohe Anpresskraft auf die Blöcke (1, 2) ausüben. Die Anpressvorrichtung (3) kann Elemente enthalten, die ausgewählt sein können aus der Gruppe Presse, Schraubklemmen, Klammern, Federpresse, Schrauben. Vorzugsweise umfasst die Anpressvorrichtungen als Elemente Schrauben. Vorzugsweise werden die Befestigungselemente im Randbereich der Blöcke (1, 2) angeordnet. Beispielsweise in einer Ausführungsform die in der Figur 5 gezeigt wird, dort ist ein Randbereich in Form einer kreisförmigen Scheibe gezeigt, in dem sechs Durchführungen angeordnet sind. Die Spitzen der Schrauben werden durch die in den Blöcken (1, 2) eingelassenen Durchführungen geführt und die Blöcke mit den Kontaktflächen gegeneinander gepresst. Für den Fall von polymeren Dichtungsmaterialien ist es bevorzugt, dass die Presskraft, die auf die Kontaktfläche der Blöcke (1, 2) wirkt, größer als 1 kN pro cm², weiter vorzugsweise ist die auf die Kontaktfläche wirkende Presskraft größer als 2 kN pro cm². Die Presskraft hängt von dem jeweils gewählten Material des Dichtungselements ab. Bei metallischen Dichtungsmaterialien ist die Presskraft auch im Bereich von 10 kN pro cm² oder größer.

Der Begriff "Block" im Sinne der vorliegenden Beschreibung bedeutet, dass es sich um ein massives Bauteil mit einer ebenen Kontaktfläche handelt, das unter hohem Anpressdruck keine oder nur eine unwesentliche Formveränderung zeigt. Vorzugsweise ist umfasst ein Block ein metallisches Material, wobei der Block vorzugweise eine Höhe aufweist, die > 0,5 cm ist. Weiter vorzugsweise ist die Höhe des Blocks > 0,75 cm und darüber hinaus bevorzugt ist die Höhe des Blocks > 1 cm. In einer bevorzugten Ausführungsform sind in dem Block auch Kühl- und / oder Heizelemente zur Ableitung beziehungsweise zur Zufuhr von Wärme angeordnet. Die Angabe der Höhe des Blocks bezieht sich auf die Ausdehnung eines Blockes in eine Richtung, die senkrecht zu den Kontaktflächen steht.

In einer bevorzugten Ausführungsform ist das Kanalstrukturelement dadurch gekennzeichnet, dass der Reaktionskanal, der durch das Kanalstrukturelement (9) verläuft, meanderförmig ausgestaltet ist. Es ist bevorzugt, dass der Durchmesser des Reaktionskanals im Bereich von 50 - 2500 µm und die Tiefe des Reaktionskanals im Bereich von 10 - 1500 µm liegen. Vorzugweise liegen der Durchmesser des Reaktionskanals im Bereich von 100 - 2000 µm und die Tiefe des Kanals im Bereich von 50 - 500 µm. Die Stegbreite, die aus dem Abstand von zwei benachbarten Kanallinien resultiert, ist vorzugsweise im Bereich von größer 2 mm.

Der Begriff "meanderförmig" in Bezug auf den Reaktionskanal besagt, dass der Reaktionskanal schlangenförmige Windungen, rechteckige Windungen, sinusförmig verlaufende Windungen, dreieckförmige Windungen aufweisen kann. Es folgt, dass die Längsachse des Reaktionskanals in der Ebene des Kanalstrukturelements (9) angeordnet ist beziehungsweise parallel zum Kanalstrukturelement (9) verläuft.

Als Techniken zur Fertigung des Kanalstrukturelementes können unter anderem auch die nachfolgend genannten Techniken eingesetzt werden: fräsen, laserfräsen, bohren, ätzen, dreidimensionales drucken und sintern.

In einer weiter bevorzugten Ausführungsform ist die Oberfläche des Kanalstrukturelementes mit einer Keramik oder Glasbeschichtung überzogen, wobei es bevorzugt ist, dass die Bereiche der Stegfläche ohne keramische beziehungsweise Glasbeschichtung ausgestaltet ist. Die Stegflächen werden der Wirkung des Anpressdrucks ausgesetzt und sind einer hohen mechanischen Beanspruchung ausgesetzt.

In einer bevorzugten Ausführungsform weisen die Kanalstrukturelemente (9) auch Mischelemente auf, die vorzugsweise im Eingangsbereich des Reaktionskanals angeordnete sind. Die Mischelemente bewirken eine Durchmischung der zugeführten Eduktfluide. Denkbar sind auch Ausführungsformen des Reaktorsystems bei denen der Eingangsbereich eines Reaktionskanals mit zwei oder mehr Zuführungsleitungen ausgestattet ist. Beispielsweise bei zwei Zuführungen können diese in Form eines oder mehrerer Y-Stücke oder in Form eines oder mehrerer T-Stücke ausgeführt sein.

Vorzugsweise weist die zumindest eine Dichtungsschicht (8) eine Dicke im Bereich von 0,1 - 10 mm auf. Vorzugsweise weist die zumindest eine Dichtungsschicht (8) eine Dicke im Bereich von 0,15 - 5 mm auf.

Bevorzugt ist eine Ausführung des Reaktorsystems, dass eine Katalysatorfolie (15) umfasst, die zwischen einer Dichtungsschicht (8) und einem Kanalstrukturelement (9) angeordnet ist, wobei die Dicke der Katalysatorfolie (15) in einem Bereich von 0,08 - 1 mm liegt.

In einer bevorzugten Ausführungsform ist das Reaktorsystem dadurch gekennzeichnet ist, dass zumindest eine der Zwischenschichten ein kompressibles, ein viskoelastisches oder ein plastisches Material enthält, welches als Dichtungselement wirkt. Vorzugsweise umfasst das kompressible, das visko-elastische oder das plastische Material ein Material aus der Gruppe der Polymermaterialien, beispielsweise Teflon oder POM, oder aus der Gruppe der anorganischen Materialien, beispielsweise ein kohlenstoffhaltiges Material oder ein metallhaltiges Material. Bei dem kohlenstoffhaltigen Material handelt es sich vorzugsweise um graphitischen Kohlenstoff und weiter bevorzugt um blähgraphitischen Kohlenstoff. Bei den Metallen handelt es sich um Metalle aus der Gruppe Kupfer, Aluminium, Gold, Blei, wobei weiche Metalle bevorzugt sind, insbesondere Metalle aus der Gruppe Kupfer, Blei, Aluminium sowie Legierungen aus diesen Metallen.

Bei blähgraphitischen Kohlenstoff handelt es sich um Kohlenstoff, der in dünnen Schichten erhältlich ist. Beispielsweise ist blähgraphitischer Kohlenstoff unter dem Handelsnamen Sigraflex von der Firma SGL Carbon erhältlich. Die Abkürzung POM bedeutet Polyoxymethylen. Der Begriff Teflon umfasst auch teflonhaltige Materialien wie PTFE (d.h. Polytetrafluorethylen), FKM (d.h. Fluor Karbon-Kautschuck, das unter dem Handelsnamen Viton erhältlich ist). FFKM Perfluor-Elsatomer = Kalrez.

Auch bevorzugt ist die Verwendung von Dichtungsmaterialien beziehungsweise Zwischenschichtmaterialien, die eine plastische Verformbarkeit aufweisen. Plastisch verformbare Materialien sind dadurch gekennzeichnet, dass sich diese unter einer Krafteinwirkung nach Überschreiten einer Fließgrenze irreversibel verformen ("fließen") und diese Form nach der Einwirkung beibehalten. Unterhalb der Fließgrenze treten keine oder nur elastische Deformationen auf.

In einer bevorzugten Ausführungsform umfassen die Blöcke (1, 2) ein metallisches Material, das ausgewählt ist aus der Gruppe Kupfer, Messing, Aluminium, Eisen, eisenhaltiger Stahl, Edelstahl, nickelchromhaltiger Edelstahl, hochlegierte korrosionsbeständige Edelstähle. (Vorzugsweise umfassen die Blöcke Edelstahl als metallisches Material. Weiter bevorzugt ist es, dass die Blöcke mit Beheizungs- und / oder Kühlelementen ausgestattet sind. Darüber hinaus ist es bevorzugt, dass die Blöcke Sensorelemente umfassen, mit denen beispielsweise die Temperatur des Blocks gemessen werden kann. Noch weiter bevorzugt ist es, dass die Sensorelemente Mikrofaserkabel umfassen, mit denen in-situ spektroskopisch Untersuchungen an dem Fluid oder an der Katalysatorfolie (15) durchgeführt werden.) Weiter bevorzugt ist auch, dass das Kanalstrukturelement oder Teile der des Blocks mit einer keramischen Schutzschicht überzogen vorliegen.

In einer weiteren Ausführungsform ist der Reaktionskanal des Kanalstrukturelements (9) mit Katalysator befüllt oder beschichtet. (Vorzugsweise ist der Reaktionskanal mit pulverförmigem Katalysator befüllt, der eine mittlere Partikelgröße aufweist, die im Bereich 10 - 100 µm kleiner ist als die Tiefe eines Reaktionskanals.)

Das Reaktorsystem für Durchflussreaktionen ist in einer Apparatur zur Durchführung von katalytischen Konversionen und Testreaktionen integriert, wobei die Apparatur eine Reaktandenzufuhr zur Zuführung von Flüssigkeiten und/oder Gasen umfasst, die Trägerfluid in Form von Flüssigkeiten und Gasen einschließen, die Reaktandenzufuhr umfasst Elemente aus der Gruppe Massenflussregler, Hochdruckpumpe, Gassättiger, weiter vorzugsweise umfasst die Apparatur Mittel zur Analyse der Produktströme, darüber hinaus bevorzugt ist die Apparatur mit einer Steuer- und/oder Kontrollvorrichtung ausgestattet.

Das erfindungsgemäße Reaktorsystem kann zur Durchführung von homogen katalysierten oder heterogen katalysierten Reaktionen eingesetzt werden. Bei den Reaktionen kann es sich um organische Synthesen von niedermolekularen organischen Molekülen oder auch um die Herstellung von Oligomeren beziehungsweise Polymeren handeln. In einer bevorzugten Ausführungsform wird das erfindungsgemäße Reaktorsystem in Gegenwart von einem Katalysator betrieben. Besonders bevorzugt in Gegenwart von einem katalytischen Film. Dem Reaktorsystem können flüssige und/oder gasförmige Fluide zugeführt werden.

Die Erfindung betrifft auch ein Verfahren zur Durchführung von katalytischen Reaktionen mittels des Reaktionssystems, das im Rahmen der Offenbarung dargestellt wird. Bei dem Verfahren ist es bevorzugt, dass das Reaktorsystems bei einer Temperatur im Bereich von 20 - 200 °C gelagert wird, vorzugsweise bei einer Temperatur im Bereich von 50 - 190 °C, weiter vorzugsweise bei einer Temperatur im Bereich von 80 - 180 °C.

In einer bevorzugten Ausführungsform wird das erfindungsgemäße Verfahren bei einem Druck im Bereich von 0,05 - 300 barg durchgeführt wird, weiter vorzugsweise bei einem Druck im Bereich von 0,1 - 100 barg, darüber hinaus bevorzugt bei einem Druck im Bereich von 0,5 - 60 barg. Insbesondere bevorzugt sind die Durchführung des erfindungsgemäßen Verfahrens in der Form von einem Hochdruckverfahren bei einem Druck im Bereich von 10 - 300 bar, weiter bevorzugt sind die Durchführung von einem Hochdruckverfahren bei einem Druck im Bereich von 20 - 250 bar und darüber hinaus bevorzugt sind die Durchführung von einem Hochdruckverfahren bei einem Druck im Bereich von 45 - 200 bar.

Darüber hinaus ist das Verfahren in einer bevorzugten Ausführungsform dadurch gekennzeichnet, dass das Verfahren bei einer Flussrate im Bereich von 0,05 - 100 mL/min durchgeführt wird, vorzugsweise bei einer Flussrate im Bereich von 0,1 - 50 mL/min, darüber hinaus bevorzugt bei einer Flussrate im Bereich von 0,2 bis 2,5 mL/min.

Als vorteilhaft ist auch zu nennen, dass das Reaktorsystem in Verbindung mit der Verarbeitung von unterschiedlichen Fluidgemischen sehr einfach im Taylor -Flow-Regime betrieben werden kann. Dadurch ist es möglich, die für die Reaktion eingesetzten Reaktandenfluide in sehr homogener Art und Weise zu durchmischen. Hierfür liegt das Reaktorsystem vorteilhafterweise in einer Ausführung vor, bei der jeder Reaktionskanal eines Kanalstrukturelements (9) zumindest zwei Zuleitungen (10, 10') aufweist, vorzugsweise weist jeder Reaktionskanal eines Kanalstrukturelements drei Zuleitungen (10, 10', 10") auf.

Die mittels des Reaktorsystems durchgeführten Untersuchungen sind durch eine hohe Datenqualität gekennzeichnet, da die Prozessparameter sehr genau kontrolliert werden können. Zu den Prozessparametern gehören die Verweilzeit, die Durchmischung der Fluide und die Bereitstellung von definierten Kontaktflächen.

In einer weiteren Ausführungsform ist das erfindungsgemäße Reaktorsystem mit Sensorelementen ausgestattet, mittels denen die Prozessparameter während der Durchführung der katalytischen Untersuchungen registriert werden können.

Das erfindungsgemäße Reaktorsystem bietet auch den Vorteil, dass es in einer abgewandelten Form in einer Hochdurchsatzvorrichtung eingesetzt werden kann. Eine Hochdurchsatzvorrichtung ist dadurch gekennzeichnet, dass diese mit einer Mehrzahl beziehungsweise einer Vielzahl von Reaktionskanälen ausgestattet ist. Es sind Ausführungsformen denkbar, bei denen die Kanalstrukturelemente in einer abgewandelten Form vorliegen, die dadurch gekennzeichnet ist, dass ein einzelnes Kanalstrukturelement (9) zwei oder mehr Reaktionskanäle aufweisen kann. Das entsprechende Reaktionssystem verfügt dann über eine größere Anzahl von Zuführungskanälen und Ableitungskanälen, mit denen Eduktfluid zu den einzelnen Reaktionskanälen des Kanalstrukturelements (9) geführt wird. Denkbar ist auch eine Ausführungsform, bei der ein Reaktionssystem mit einer Vielzahl von Kanalstrukturelementen versehen ist. So können beispielsweise auch vier kreisförmig ausgestaltete Kanalstrukturelemente (9) in der Kontaktfläche eines Blocks positioniert werden. Die Vielzahl von Kanalstrukturelemente (9) kann dann wiederum von einem gemeinsamen Dichtungselement oder die jedes Kanalstrukturelement (9) von einem eigenen Dichtungselement abgedichtet werden. Das Reaktionssystem weist dann eine entsprechende Anzahl von Zuleitungen und Ableitungen auf, die dazu dienen, den Reaktionskanälen die entsprechenden Fluide (d.h. Eduktfluid oder Produktfluid) zuzuführen oder diese von den Reaktionskanälen abzuführen. Bei entsprechend kleiner Ausführung der Reaktionssysteme ist es natürlich auf möglich, mehrere dieser Reaktionssysteme als eigenständige Elemente in der gleichen Apparatur in einer parallelen Anordnung zu betreiben.

Tabelle A.1 zeigt eine Übersicht zur Dimensionierung der Reaktionsräume für unterschiedliche Kanalstrukturelemente, die durch den Durchmesser des Kanalstrukturelementes und die Ausgestaltung Kanalstruktur bestimmt werden - und zwar in einer Ausführungsform als Reaktorsystem für Forschungszwecke. Im vorliegenden Fall wird die Dimensionierung für Kanäle gezeigt, die einen Durchmesser von 1 mm und eine Tiefe von 0.5 mm aufweisen, wobei die Kanäle mit einer meanderförmigen Struktur in die Oberfläche des Kanalstrukturelements eingearbeitet sind.

| Länge eines Kanals innerhalb der Oberfläche [mm] | Anzahl der Kanäle in Element | Kanallänge innerhalb des Elements [mm] | Kanalvolumen [mm3] | Kanalvolumen [cm³] |
|---|---|---|---|---|
| 20 | 9 | 113 | 90 | 0,09 |
| | | | | |
| 30 | 14 | 270 | 210 | 0,21 |
| 40 | 19 | 493 | 380 | 0,38 |
| 50 | 24 | 783 | 600 | 0,60 |
| 100 | 49 | 3233 | 2450 | 2,45 |
| 150 | 74 | 7350 | 5556 | 5,55 |
| 200 | 99 | 13133 | 9900 | 9,90 |

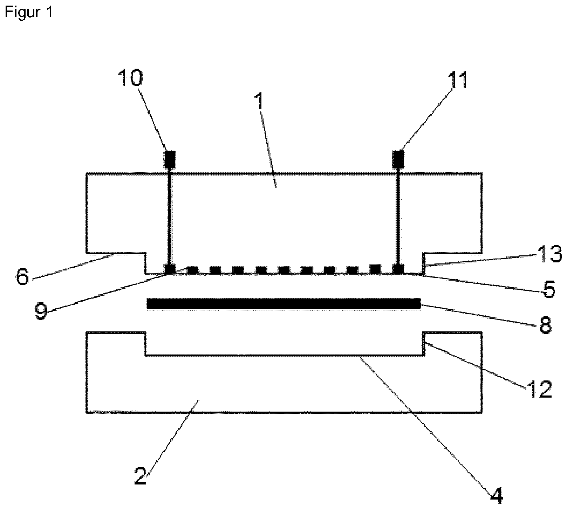

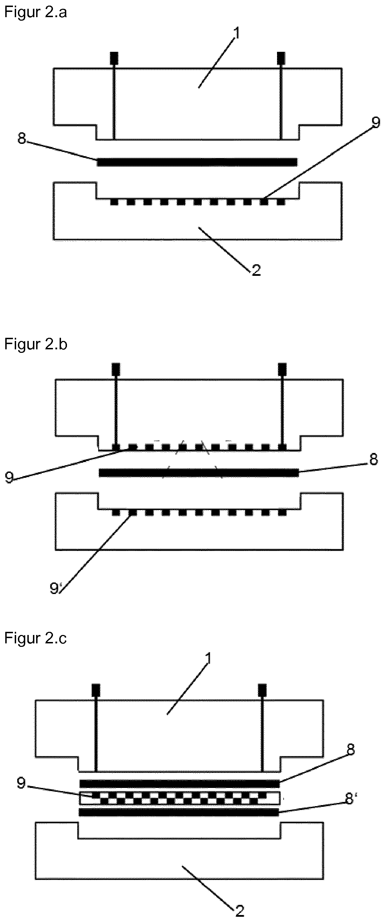

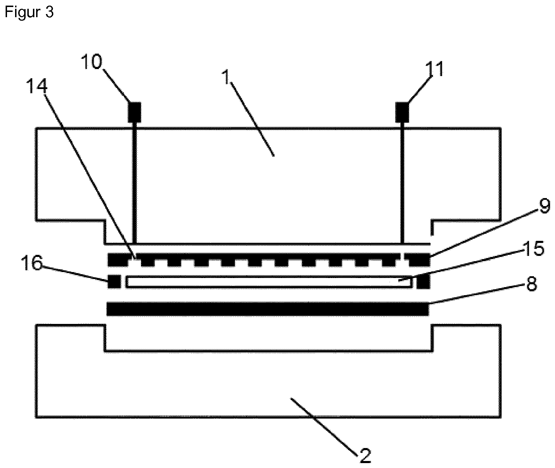

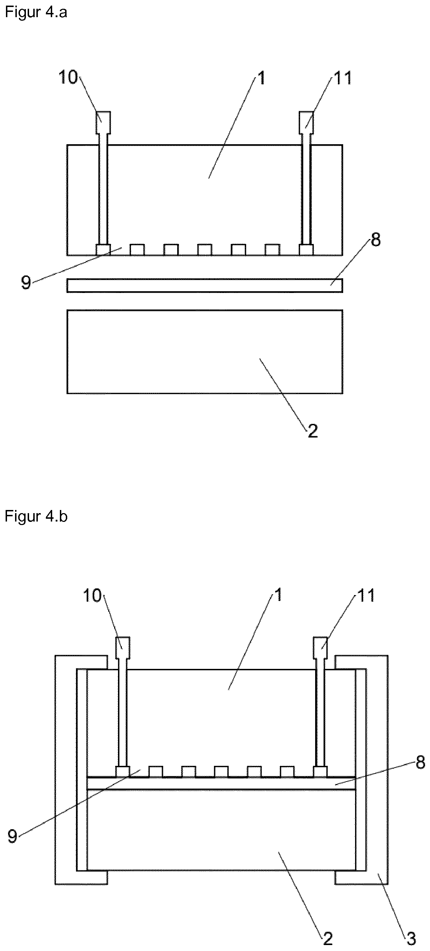

Das erfindungsgemäße Reaktorsystem wird anhand der Ausführungen erläutert, die in den Figuren gezeigt werden, die jedoch in keiner Weise als einschränkend für die Erfindung angesehen werden. In der Figur 2.a ist gezeigt, dass das Kanalstrukturelement (9) auf der Fläche der Vertiefung des Blocks (2) positioniert sein kann oder in die Fläche dieses Blocks integriert sein kann. Der Block (1) ist oberhalb des Blocks (2) angeordnet, wobei das Dichtungselement (8) und das Kanalstrukturelement (9) zwischen den Kontaktflächen der Blöcke (1, 2) angeordnet sind. In der Ausführungsform, die in der Figur 2.a gezeigt wird, verläuft die Verbindung der Zuleitung und der Ableitung durch das Dichtungselement (8). In der Figur 2.b ist eine abgewandelte Ausführungsform gezeigt, bei der das Reaktorsystem mit zwei Kanalstrukturelementen (9) und (9') versehen ist. Bei dieser Ausführungsform ist zu beachten, dass das Dichtungselement zwei Durchführungen aufweisen muss, die die Verbindung von oberem Kanalstrukturelement (9) und unterem Kanalstrukturelement (9') gewährleisten. Durch die Anordnung von mehreren Kanalstrukturelementen ist es möglich, die Länge eines Reaktionskanals zu verlängern ohne gleichzeitig den Durchmesser des Reaktorsystems vergrößern zu müssen. Eine weitere Ausführungsform des erfindungsgemäßen Reaktorsystems mit einer stapelförmigen Anordnung von zwei Kanalstrukturelementen (9) beziehungsweise einem Kanalstrukturelement (9), welches ein Doppelelement zeigt, ist in der Figur 2.c gegeben. Die Anordnung ist dadurch charakterisiert, dass die Kanäle der übereinanderliegenden Kanalstrukturelemente (9) versetzt sind. Weiterhin wird jedes der zwei Kanalstrukturelemente (9) durch ein Dichtungselement (8) und ein Dichtungselement (8') abgedichtet. Das obere Dichtungselement (8) weist Durchführungen auf, die die Zuleitung (10) und Ableitung (11) mit dem Reaktionskanal des oberen Kanalstrukturelements (9) verbinden. In dieser Ausführungsform mit zwei Kanalstrukturelementen (9) muss auch eine Verbindung zwischen dem Reaktionskanal des oberen Kanalstrukturelements (9) mit dem Reaktionskanal des unteren Kanalstrukturelements (9) gegeben sein. In der Figur 3 ist eine Ausführungsform des Reaktorsystems gezeigt, die mit einem Katalysatorfilm (15) ausgestattet ist und die besonders bevorzugt ist. Der Katalysatorfilm (15) ist zwischen dem Dichtungselement (8) und dem Kanalstrukturelement angeordnet. Die Zuführungsleitung (10) und die Ableitung (11) führen durch das Kanalstrukturelement (9), wobei in der Figur 3 die Durchführung auf der linken Seite des Kanalstrukturelements (9) mit dem Bezugszeichen (14) gekennzeichnet ist. Der Katalysatorfilm (15) kann im Randbereich mit Dichtungsmitteln (16) versehen sein. Bei diesem Randbereich handelt es sich um den Randbereich in unmittelbarer Nähe zum Reaktionskanal, der von dem äußeren Randbereich (6) zu unterscheiden ist. Der äußere Randbereich (6) dient der Anpressvorrichtung wie beispielsweise der Durchführung von Befestigungselementen in der Form von Schrauben (wie in Figur 5 anhand von Durchführungen (17) gezeigt wird. Die Figur 4.a und die Figur 4.b zeigt das erfindungsgemäße Reaktorsystem ohne die stempelförmige Erhöhung und die matrizenförmige Vertiefung, die in den Figuren 1, 2.a, 2.b, 2.c oder auch Figur 3 zu erkennen ist. In der Figur 4.b ist eine Anpressvorrichtung (3) in der Form von Klammern gezeigt. In der Figur 4.a und in der Figur 4.b ist das Kanalstrukturelement jeweils in den Block (1) integriert.

Ein vorteilhafter Aspekt der modularen Anordnung ist auch, dass die Elemente des Reaktorsystems in einer flexiblen Art und Weise kombiniert werden können. In einer weiteren Ausführungsform umfasst das Reaktorsystem für Durchflussreaktionen ein Kanalstrukturelement (9), das zwischen einer oberen und einer unteren Dichtungsschicht (8) angeordnet ist und das sowohl zwischen der oberen und der unteren Dichtungsschicht jeweils einen Katalysatorfilm (15) aufweist.

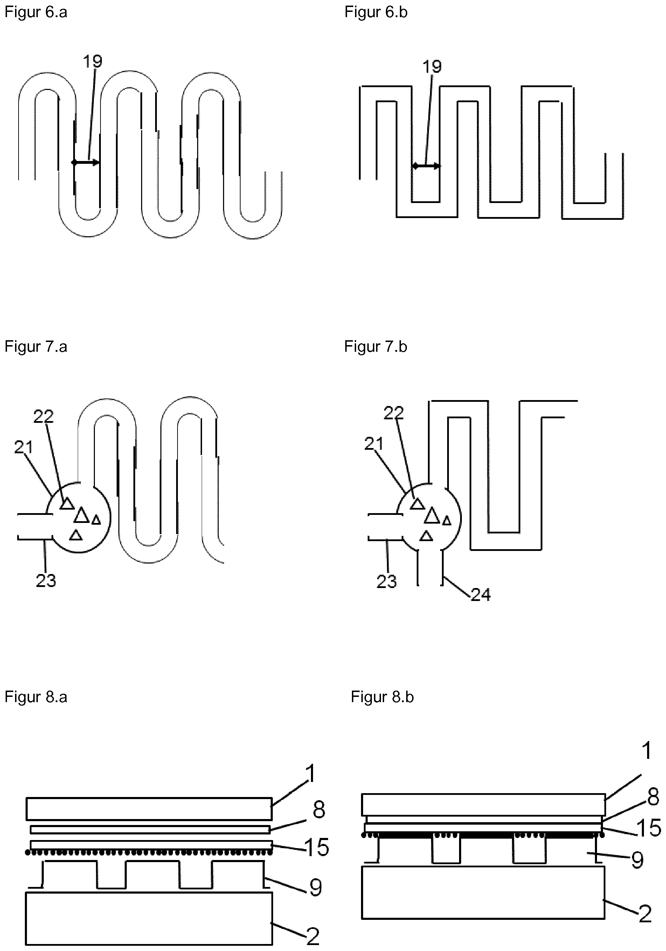

In der Figur 5 ist eine schematische Aufsicht auf die Fläche eines Blocks des erfindungsgemäßen Reaktorsystems in einer bevorzugten Ausführungsform gezeigt. Nicht zu erkennen ist dabei, ob der kreisförmige Bereich im Zentrum erhöht oder vertieft ist. Der Bereich im Innenbereich der Kontaktfläche wird mit den Bezugszeichen (4) und (5) gekennzeichnet. Hierbei handelt es sich um den zentralen Bereich, in dem das Kanalstrukturelement (9) angeordnet ist. Die Bezugszeichen (4) und (5) wurden gewählt, da es sich um die Kontaktfläche innerhalb der Vertiefung oder um die Kontaktfläche innerhalb von der Erhöhung handeln kann. In Figur 5 ist auch der meanderförmige Verlauf des Reaktionskanals mit dem Steg (19) zwischen benachbarten Kanalabschnitten gezeigt. Eine gewisse Stegbreite ist von Bedeutung, da das Dichtungselement beziehungsweise der Katalysatorfilm eine dichtende Verbindung mit dem Steg bildet. Vorzugsweise ist die Stegbreite im Bereich > 0,1 cm. Weiter vorzugsweise ist die Stegbreite > 0,2 cm. Zwei Ausgestaltungen des meanderförmigen Reaktionskanals sind in den Figuren 6.a und 6.b gezeigt, wobei die Figur 6.a einen Reaktionskanal mit kreisförmigen Krümmungen und die Figur 6.b einen Reaktionskanal mit eckigen Krümmungen zeigt. In der Figur 7.a ist eine Ausführungsform eines Reaktionskanals gezeigt, die zu Beginn des Reaktionskanals ein Mischelement (21) aufweist. Das Mischelement (21) ist mit strömungsbrechenden Elementen (22) versehen, die eine Durchmischung des zugeführten Eduktfluids ermöglichen. In der Figur 7.a ist der Kontaktpunkt von der Zuführung zu dem Mischelement (21) durch das Bezugszeichen (23) gekennzeichnet. In der Figur 7.b ist eine Ausführungsform gezeigt, bei der das Mischelement (21) mit zwei Zuführungsleitungen ausgestattet ist - und zwar mit den Zuführungsleitungen, die die Verbindungspunkte (23) und (24) aufweisen. In Figur 8.a wird eine schematische Darstellung eines Ausschnitts des Reaktorsystems im geöffneten Zustand gezeigt, wobei in zwischen dem Kanalstrukturelement (9) und dem Dichtungselement (8) ein Katalysatorfilm (15) angeordnet ist. In Figur 8.b wird ein Ausschnitt aus dem Reaktorsystem gezeigt, der dem Ausschnitt in der Figur 8.a entspricht, wobei jedoch das Reaktorsystem im geschlossenen Zustand gezeigt wird. In der Figur 8.b ist das Funktionsprinzip zu erkennen, wie der Katalysatorfilm (15) in Verbindung mit dem Dichtungselement (8) zu einer Formschlüssigen Abdichtung der Stegflächen des Kanalstrukturelements (9) führt.

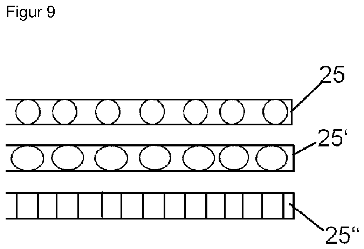

In einer weiteren Ausführungsform wird das Reaktorsystem dazu verwendet, um Untersuchungen in Verfahren durchzuführen, die in Gegenwart von mehrphasigen Eduktfluiden durchgeführt werden, die nicht mischbar oder nur bedingt mischbar sind. Ein Kennzeichen für die Durchführung von Untersuchungen in Gegenwart von denjenigen Eduktfluiden, die mehrphasig sind und die nur eine geringe Durchmischbarkeit aufweisen, ist, dass das Verfahren vorzugsweise in Betrieb mit einem Taylor-Flow durchgeführt wird. Die Bedingungen des Taylor-Flows können mittels des erfindungsgemäßen Reaktorsystems in sehr genauer Weise kontrolliert werden. Zur Veranschaulichung von unterschiedlichen Taylor-Flow-Bedingungen ist die Darstellung in der Figur 9.a gegeben. Im oberen Teil und im mittleren Teil sind Abschnitte eines Reaktionskanals gezeigt, durch den Ein Taylor-Flow mit einem Zweiphasensystem aus Gas- und Flüssigkeit geleitet wird. In dem Kanalabschnitt (25) werden die Luftbläschen stärker komprimiert als in dem Kanalabschnitt (25`). In dem unteren Teil ist ein Abschnitt eines Reaktionskanals (25") gezeigt, durch den zwei Flüssigkeiten im Taylor-Flow hindurchfließen. Die beiden Flüssigkeiten zeigen einen pfropfenförmigen Strömungsverlauf von einzelnen Strömungspfropfen, die sich gegenseitige abwechseln.

### Beispiele

Zur Illustration der Erfindung wurde unter Verwendung des erfindungsgemäßen Reaktorsystems die katalytische Oxidation von Glucose untersucht, die im folgenden Teil erläutert wird. Es wurde ein Reaktorsystem, dessen Blöcke aus Edelstahl gefertigt waren und das in der Ausführungsform so aufgebaut war wie das Reaktorsystem, das in der Figur 2 gezeigt ist. Der eine Block des Reaktorsystems war mit einem Stempel versehen, der einen Stempeldurchmesser von 2 cm aufwies, der zweite Block war mit einer lochförmigen Öffnung zur Einführung des Stempels ausgestattet. Bei den Experimenten wurden unterschiedliche Zwischenschichten in dem Spaltraum zwischen den zwei Blöcken eingesetzt. Zum Verschließen des Reaktorsystems wurden die Blöcke mit Schrauben gegeneinandergepresst, um dadurch: a) das Strukturelement gegen die Dichtungsplatte zu drücken oder b) das Strukturelement gegen die Katalysatorfolie und die Dichtungsplatte zu drücken.

Bei den Untersuchungen wurde das erfindungsgemäße Reaktorsystem in einen Umluftofen eingesetzt, mittels dem eine Temperierung des Reaktorsystems gewährleistet wurde. Die Zuführungsleitung des Reaktorsystems war mit einem Mischelement verbunden, das sowohl mit einer Zuführung für Flüssigkeiten als auch mit einer Zuführung für Gase ausgestattet. Die Flüssigkeitszuführung war durch eine Leitung mit einer Hochdruckpumpe und einem Vorratsbehälter verbunden, der mit einer wässerigen Glucose-Lösung (90 mg/L) befüllt worden war. Die Gaszuführung war mit Reglern und Gasversorgungsleitung verbunden, wobei mittels der Gasversorgung unterschiedliche Gase mit der gewünschten Flussrate zugeführt werden konnten. Die Ableitung des Reaktorsystems war mit einem Abtrennbehälter für die Entfernung von Gasen und Abluftleitungen verbunden. Das von dem Reaktorsystem abgeleitete Produktfluid wurde mittels Gaschromatographie charakterisiert, wobei hierbei ein Agilent GC mit einer 10 Metersäule eingesetzt wurde.

Zur Charakterisierung der Leeraktivität des Reaktorsystems wurde eine Reihe von Testuntersuchungen zur Oxidation von Glucose-Lösung durchgeführt, bei denen die Verweilzeit und die Temperatur verändert wurden. Die Ergebnisse dieser Testuntersuchungen sind in der Tabelle 1 zeigt. Es wurde die Glucose-Lösung eingesetzt, deren Glucose-Gehalt bei 90 mg Glucose pro Liter Wasser lag. Die Lösung mit dem gleichen Glucose-Gehalt wurde auch bei den übrigen Testuntersuchungen eingesetzt, die in den vorliegenden Beispielen aufgeführt werden. Die Oxidationsreaktionen wurden bei 50 bar durchgeführt, wobei hierbei die bei den Untersuchungen gewählten Temperaturstufen bei 130 °C, bei 150 °C und bei 170 °C lagen. Die Strömungsgeschwindigkeit der Glucose-Lösung und des Sauerstoffs lagen jeweils bei 0,1 ml/min. Die Verweilzeiten, welche die Zeit der Reaktionslösung im Reaktionsraum des Reaktorsystems charakterisieren, lagen bei 7,5 Sekunden, bei 15 Sekunden, bei 30 Sekunden und bei 60 Sekunden.

Um den Einsatzbereich des Reaktorsystems bei unterschiedlichen Betriebspunkten näher zu illustrieren, wurde eine Reihe von Testuntersuchungen zur Oxidation von Glucose-Lösungen durchgeführt, die in Anwesenheit oder in Abwesenheit einer Katalysatorfolie durchgeführt wurden. Die Ergebnisse dieser Untersuchung sind in der Tabelle 2 gezeigt. Als Katalysatorfolie wurde eine platinierte Platinfolie eingesetzt, wobei die Untersuchungen bei einer Reaktortemperatur von 130 °C und eine einem Druck von 50 bar durchgeführt wurden.

**Tabelle 1 zeigt eine Reihe von Leermessungen bei denen die Glucose-Lösung und Sauerstoff jeweils bei unterschiedlichen Strömungsgeschwindigkeiten durch das Reaktorsystem gefördert wurden.**

| | Verweilzeit [s] | Konversion [%] bei T = 130 °C | Konversion [%] bei T = 150 °C | Konversion [%] bei T = 170 °C |
|---|---|---|---|---|
| B1 | 3,25 | < 1 | <1 | 4,0 |
| B2 | 7,5 | 2,2 | 4,0 | 5,0 |
| B3 | 15 | 4,9 | 5,1 | 5,1 |
| B4 | 30 | 6,4 | 9 | 15 |
| B5 | 60 | 6,5 | 12 | 28 |

**Tabelle 2 zeigt eine Reihe von Experimenten, die bei einer Reaktortemperatur von 130 °C und unterschiedlichen Strömungsgeschwindigkeiten in Anwesenheit und Abwesenheit von einer Katalysatorfolie durchgeführt wurden, wobei die Konversion als Funktion der Time-on-Stream (nachfolgend auch TOS genannt) beziehungsweise der Versuchszeit bestimmt wurde.**

| | Strömungsgeschwindigkeit Gl-Lsg. [ml/min] | Konversion [%] bei TOS = 1 h | Konversion [%] bei TOS = 2 h | Konversion [%] bei TOS = 3 h |
|---|---|---|---|---|
| B6 | 0,05 | 5 | 9 | 5 |
| B7 | 0,1 | 14 | 5 | 3 |
| B8 (Cat) | 0,05 | 70 | 64 | 63 |
| B9 (Cat) | 0,1 | 43 | 48 | 50 |

**Tabelle 3 zeigt eine Reihe von Experimenten B10 - B12, die bei einer Reaktortemperatur von 150 °C, einem Druck von 9 bar und Strömungsgeschwindigkeiten von Glucose-Lösung und Luft jeweils von 0,05 ml/min durchgeführt wurden. Das in dem Reaktorsystem eingesetzte Strukturelement war aus Teflon gefertigt.**

| | Konversion [%] bei TOS = 1 h | Konversion [%] bei TOS = 2h | Konversion [%] bei TOS = 3h | Konversion [%] bei TOS = 4 h | Konversion [%] bei TOS = 5 h |
|---|---|---|---|---|---|
| B10 (leer) | 16 | 12 | 14 | 8 | |
| B11 (Cat) | 65 | 66 | 56 | 68 | 82 |
| B12 (Cat) | 73 | 74 | 68 | 60 | 76 |

**Tabelle 4 zeigt eine Reihe von Experimenten B13 - B16, die bei einer Reaktortemperatur von 150 °C, einem Druck von 9 bar und Strömungsgeschwindigkeiten von Glucose-Lösung und Luft von 0,05 ml/min beziehungsweise von 0,1 ml/min durchgeführt wurden. Das in dem Reaktorsystem eingesetzte Strukturelement war aus Teflon gefertigt.**

| | Konversion [%] bei TOS = 1 h | Konversion [%] bei TOS = 2h | Konversion [%] bei TOS = 3h | Konversion [%] bei TOS = 4 h | Konversion [%] bei TOS = 5 h |
|---|---|---|---|---|---|
| B13-0,05 | 16 | 11 | 12 | 8 | / |
| B14 - 0,1 | 9 | 11 | 8 | 10 | / |
| B15 (Cat) - 0,05 | 66 | 68 | 64 | 63 | 56 |
| B16 (Cat) - 0,1 | 55 | 58 | 54 | 54 | 55 |

**Tabelle 5 zeigt eine Reihe von Experimenten B17 - B21, die jeweils bei einem Druck von 50 bar durchgeführt wurden. Alle Experimente B17 - B21 wurden mit der gleichen Katalysator-Probe durchgeführt.**

| | Edukt | Temperatur [° C] | Verweilzeit [h] | Katalysator | Konversion [%] |
|---|---|---|---|---|---|
| B17 | Glucose | 120 | 1 | Pt auf Blähgraphit | 100 |
| B18 | Glucose | 120 | 1 | Pt auf Blähgraphit | 72 |
| B19 | Glucose | 80 | 6 | Pt auf Blähgraphit | 83 |
| B20 | HMF | 50 | 4 | Pt auf Blähgraphit | 52 |
| B21 | HMF | 50 | 6 | Pt auf Blähgraphit | 100 |

Bei den Experimenten wurden Dichtungselemente aus Graphitfolie oder aus Teflonfolie verwendet. Darüber hinaus wurden Kanalstrukturelemente verwendet, die aus Teflon oder aus Edelstahl gefertigt waren.

Kurze Beschreibung der Figuren:
- Figur 1: zeigt die schematische Darstellung eines Reaktionssystems im Querschnitt. Die beiden Blöcke (1, 2) sind nicht verbunden und das Reaktionssystem liegt im geöffneten Zustand vor, wobei das Kanalstrukturelement (9) in die Verbindungsfläche (5) des ersten Blocks (1) integriert ist.
- Figur 2.a: zeigt die schematische Darstellung des Reaktionssystems, das in der Figur 1 gezeigt ist, wobei das Kanalstrukturelement (9) in die Verbindungsfläche (4) des zweiten Blocks (2) integriert ist.
- Figur 2.b: zeigt eine schematische Darstellung eines Reaktionssystems, bei dem sowohl die Verbindungsfläche (5) des ersten Blocks mit einem Kanalstrukturelement (9) als auch die Verbindungsfläche (4) des zweiten Blocks (2) mit einem Kanalstrukturelement (9') ausgestattet ist. Nicht in der Figur eingezeichnet sind die Durchführungen im Dichtungselement (8).
- Figur 2.c: zeigt eine schematische Darstellung eines Reaktionssystems, bei dem das Kanalstrukturelement (9) separat vorliegt und somit nicht in die Verbindungsflächen der Blöcke (1, 2) integriert ist. Das Kanalstrukturelement (9) ist von den Dichtungselementen (8) und (8') umgeben. Das Kanalstrukturelement (9) liegt als gestapeltes Element vor, das aus zwei unterschiedlichen Kanalstrukturelementen (9) gebildet wird, wobei die übereinanderliegenden Elemente versetzte Kanäle aufweisen.
- Figur 3: zeigt eine schematische Darstellung eines Reaktionssystems, bei dem in der stapelförmigen Anordnung zwischen dem Kanalstrukturelement (9) und dem Dichtungselement (8) ein Katalysatorfilm (15) angeordnet ist. Der Katalysatorfilm (15) wird durch die seitliche Abdichtung (16) abgedichtet. In dem Kanalstrukturelement (9) ist eine Leitungsdurchführung, die die Zuführung von Fluid durch die Leitung (10) in den Kanal ermöglicht.
- Figur 4.a: zeigt eine schematische Darstellung eines Reaktionssystems im geöffneten Zustand, bei dem das Kanalstrukturelement (9) in die Verbindungsfläche (5) des ersten Blocks integriert ist. Hierbei sind der Block (1) ohne flache Stempelspitze und der Block (2) ohne eine Mulde ausgestattet.
- Figur 4.b: zeigt eine schematische Darstellung eines Reaktionssystems im geschlossenen Zustand, wobei die beiden Blöcke (1, 2) mittels der Befestigungselemente (3) verbunden sind, wobei das Dichtungselement (8) gegen das Kanalstrukturelement (9) gepresst wird.
- Figur 5: zeigt eine schematische Darstellung eines Blocks (d.h. Block (1) beziehungsweise Block (2) in der Aufsicht, wobei eine kreisförmige Verbindungsfläche gezeigt wird. Es kann sich um eine Verbindungsfläche (4) oder um eine Verbindungsfläche (5) handeln, in die ein Kanalstrukturelement (9) integriert ist, das durch schlangenförmige Kanäle gekennzeichnet ist. Zwischen den benachbarten Kanälen ist ein Steg (19) zu erkennen. In dem Randbereich (6) des Blocks sind Durchführungen (17) eingezeichnet, durch die die Befestigungselemente (3) durchgeführt werden.
- Figur 6.a: zeigt eine schematische Darstellung eines Kanalabschnitts mit sechs kreisförmig verlaufenden Kurven, die drei Kanalsegmente umfassen.
- Figur 6.b: zeigt eine schematische Darstellung eines Kanalabschnitts mit rechteckig verlaufenden Kurven. Die sechs rechteckig ausgeformten Kurven umfassen drei Kanalsegmente.
- Figur 7.a: zeigt eine schematische Darstellung eines Kanalabschnitts, dessen Eingangsbereich mit dem Mischelement (21) verbunden ist, wobei das Element (23) die Verbindung der Zuleitung (10) zum Mischelement (21) darstellt. In dem Mischelement sind Strömungsbrecher (22) angeordnet.
- Figur 7.b: zeigt eine schematische Darstellung eines Kanalabschnitts, dessen Eingangsbereich an das Mischelement (21) angeschlossen ist, wobei das Mischelement zwei Verbindungselemente (23, 24) zu den Zuleitungen (10, 10') aufweist.
- Figur 8.a: zeigt eine schematische Darstellung eines Querschnitts durch den Mittelbereich eines Reaktionssystems mit den stapelförmig angeordneten Elementen im geöffneten Zustand, wobei in dem Bereich zwischen dem Kanalstrukturelement (9) und dem Dichtungselement (8) eine Katalysatorfolie (15) angeordnet ist, die auf der Oberfläche mit Katalysatorpartikeln beschichtet ist.
- Figur 8.b: zeigt eine schematische Darstellung eines Querschnitts durch den Mittelbereich eines Reaktionssystems mit den stapelförmig angeordneten Elementen, die der Darstellung in der Figur 8.a entspricht, wobei das Reaktionssystem geschlossen ist. Der Katalysatorfilm wird gegen die Stege der Kanalstrukturelemente gepresst.
- Figur 9: zeigt eine schematische Darstellung von Ausschnitten aus Reaktionskanälen, die von zweiphasigen Fluidströmen im Taylor-Flow durchströmt werden, wobei im Fall von Kanalabschnitt (25) und Kanalabschnitt (25') eine gasförmiges und ein flüssiges Fluid gezeigt werden. In Kanalabschnitt (25") wird eine Strömung von zwei flüssigen Fluiden gezeigt, die nicht mischbar sind.

**Bezugszeichenliste**

| | | |
|---|---|---|
| 1 | - | erster Block beziehungsweise erste Platte |
| 2 | - | zweiter Block beziehungsweise zweite Platte |
| 3 | - | Befestigungselemente |
| 4 | - | Verbindungsfläche |
| 5 | - | Verbindungsfläche |
| 6 | - | Randbereich |
| 8 | - | Dichtungselement |
| 9, 9' | - | Kanalstrukturelement, Mikrokanalstrukturelement |
| 10, 10', 10‴ | - | Zuleitungen |
| | | |
| 11 | - | Ableitung |
| 14 | - | Leitungsdurchführung innerhalb des Kanalstrukturelements, beziehungsweise des Mikrokanalstrukturelements |
| 15 | - | Katalysatorfilm |
| 16 | - | seitliche Abdichtung (Abdichtung des Katalysatorfilms) |
| 17 | - | Durchführung für Befestigungselement |
| 19 | - | Steg zwischen benachbarten Kanälen |
| 21 | - | Mischelement innerhalb des Kanalstrukturelements |
| 22 | - | Strömungsbrecher innerhalb des Mischelements |
| 23 | - | Endstück der Zuleitung (10) |
| 24 | - | Endstück der Zuleitung (10') |
| 25, 25', 25" | - | Ausschnitte aus einem Kanalabschnitt mit unterschiedlichen Taylor-Fluss-Strömungspaketen |

## Patentansprüche

1. Reaktorsystem für Durchflussreaktionen, das zumindest zwei Blöcke (1, 2), zwei Zwischenschichten (8, 9) und eine Anpressvorrichtung sowie zumindest eine Zuleitung (10) und eine Ableitung (11) umfasst, wobei der erste Block (1), die Zwischenschichten (8, 9) und der zweite Block (2) eine stapelförmige mit der Anpressvorrichtung fixierte Anordnung bilden und das Reaktorsystem **dadurch gekennzeichnet ist, dass** zumindest eine Zwischenschicht eine Dichtungsschicht (8) und eine Zwischenschicht einen Reaktionskanal enthaltendes Kanalstrukturelement (9) umfasst und zwischen der Dichtungsschicht (8) und dem Kanalstrukturelement (9) eine Katalysatorfolie (15) angeordnet ist, wobei der Reaktionskanal des Kanalstrukturelements (9) meanderförmig verläuft und der Durchmesser des Reaktionskanals im Bereich von 50 - 2500 µm und die Tiefe des Reaktionskanals im Bereich von 10 - 1500 µm liegen und wobei die Zuleitung (10) mit der Eingangsseite des Reaktionskanals und die Ableitung (11) mit der Ausgangsseite des Reaktionskanals in Wirkverbindung stehen und die stapelförmige Anordnung lösbar ist.

2. Reaktorsystem für Durchflussreaktionen nach Anspruch 1; das **dadurch gekennzeichnet ist, dass** einer der Blöcke auf der Seite, auf welcher der Kontakt mit dem Gegenblock besteht, eine Erhöhung beziehungsweise die Form eines Stempels mit ebener Endfläche und einer der Blöcke auf der Seite, auf der der Kontakt mit dem Gegenblock besteht, eine Vertiefung mit flachem Boden aufweist und beim Vorliegen der stapelförmigen Anordnung die Erhöhung beziehungsweise der Stempel in der Vertiefung positioniert ist und die Zwischenschichten (8, 9) im Bereich zwischen der Endfläche des Stempels und des Bodens der Vertiefung angeordnet sind.

3. Reaktorsystem für Durchflussreaktionen nach einem der Ansprüche 1 - 2, das **dadurch gekennzeichnet ist, dass** die Zwischenschichten (8, 9) einen Durchmesser aufweisen, der im Bereich von 0,5 - 200 cm liegt.

4. Reaktorsystem für Durchflussreaktionen nach einem der Ansprüche 1 - 3, das **dadurch gekennzeichnet ist, dass** zumindest eine Zwischenschicht, die ein Kanalstrukturelement (9) umfasst, einen integralen Bestandteil der Kontaktfläche eines der Blöcke bildet oder das jeweils eine Zwischenschicht, die als Kanalstrukturelement (9) ausgeformt ist, integrale Bestandteile der Kontaktseiten der jeweiligen Blöcke bilden.

5. Reaktorsystem für Durchflussreaktionen nach einem der Ansprüche 1 - 4, das **dadurch gekennzeichnet ist, dass** jeder Reaktionskanal eines Kanalstrukturelements (9) zumindest zwei Zuleitungen (10, 10') aufweist, vorzugsweise zumindest drei Zuleitungen (10, 10', 10‴).

6. Reaktorsystem für Durchflussreaktionen nach einem der Ansprüche 1 - 5, das **dadurch gekennzeichnet ist, dass** zumindest eine Dichtungsschicht (8) eine Dicke im Bereich von 0,1 - 10 mm aufweist.

7. Reaktorsystem für Durchflussreaktionen nach einem der Ansprüche 1 - 6, das **dadurch gekennzeichnet ist, dass** zumindest eine der Zwischenschichten ein kompressibles, ein visko-elastisches oder ein plastisches Material enthält, wobei das kompressible, das visko-elastische oder das plastische Material ein Material aus der Gruppe der Polymermaterialien oder aus der Gruppe der anorganischen Materialien umfasst.

8. Reaktorsystem für Durchflussreaktionen nach einem der Ansprüche 1 - 7, das **dadurch gekennzeichnet ist, dass** die Blöcke (1, 2) ein metallisches Material umfassen, das ausgewählt ist aus der Gruppe Kupfer, Messing, Aluminium, Eisen, eisenhaltiger Stahl, Edelstahl, nickelchromhaltiger Edelstahl, hochlegierte korrosionsbeständige Edelstähle.

9. Reaktorsystem für Durchflussreaktionen nach einem der Ansprüche 1 - 8, das **dadurch gekennzeichnet ist, dass** der Reaktionskanal des Kanalstrukturelements (9) mit Katalysator befüllt oder beschichtet vorliegt.

10. Reaktorsystem für Durchflussreaktionen nach einem der Ansprüche 1 - 9, das in eine Apparatur zur Durchführung von katalytischen Testreaktionen integriert ist, wobei die Apparatur eine Reaktandenzufuhr zur Zuführung von Flüssigkeiten und/oder Gasen umfasst, die Trägerfluid in Form von Flüssigkeiten und Gasen einschließen, die Reaktandenzufuhr umfasst Elemente aus der Gruppe Massenflussregler, Hochdruckpumpe, Gassättiger.

11. Verfahren zur Durchführung von katalytischen Reaktionen mittels eines Reaktorsystems nach einem der Ansprüche 1 - 10, wobei das Verfahren **dadurch gekennzeichnet ist, dass** das Verfahren unter Zuführung von flüssigen und/oder gasförmigen Reaktanden in Gegenwart eines Feststoffkatalysators durchgeführt wird, wobei der Feststoffkatalysator in Form eines Films zwischen dem Dichtungselement (8) und dem Kanalstrukturelement (9) angeordnet ist.

12. Verfahren zur Durchführung von katalytischen Reaktionen mittels eines Reaktorsystems nach Anspruch 11, wobei das Verfahren **dadurch gekennzeichnet ist, dass** das Reaktorsystems bei einer Temperatur im Bereich von 20 - 200 °C gelagert wird.

13. Verfahren zur Untersuchung von Katalysatoren nach einem der Ansprüche 11 oder 12, wobei das Verfahren **dadurch gekennzeichnet ist, dass** das Verfahren bei einem Druck im Bereich von 0,05 - 300 barg durchgeführt wird.

14. Verfahren zur Untersuchung von Katalysatoren nach einem der Ansprüche 11 - 13, wobei das Verfahren **dadurch gekennzeichnet ist, dass** das Verfahren bei einer Flussrate im Bereich von 0,05 - 100 mL/min durchgeführt wird.

## Claims

1. A reactor system for continuous flow reactions that comprises at least two blocks (1, 2), two interlayers (8, 9) and a contact pressure device, and at least one inlet (10) and one outlet (11), wherein the first block (1), the interlayers (8, 9) and the second block (2) form a stacked arrangement fixed by the contact pressure device and, in the reactor system, at least one interlayer comprises a sealing layer (8) and one interlayer comprises a channel structure element (9) comprising a reaction channel and a catalyst foil (15) is disposed between the sealing layer (8) and the channel structure element (9), wherein the reaction channel of the channel structure element (9) takes a meandering course and the diameter of the reaction channel is in the range of 50-2500 µm and the depth of the reaction channel is in the range of 10-1500 µm and wherein the inlet (10) is functionally connected to the inlet side of the reaction channel and the outlet (11) is functionally connected to the outlet side of the reaction channel and the stacked arrangement is detachable.

2. The reactor system for continuous flow reactions according to claim 1, wherein one of the blocks, on the contact side with the opposing block, has an elevation or the shape of a die with a flat end face and one of the blocks, on the contact side with the opposing block, has a depression with a flat base and, in the presence of the stacked arrangement, the elevation or the die is positioned in the depression and the interlayers (8, 9) are disposed in the region between the end face of the die and the base of the depression.

3. The reactor system for continuous flow reactions according to either of claims 1-2, wherein the interlayers (8, 9) have a diameter in the range of 0.5-200 cm.

4. The reactor system for continuous flow reactions according to any of claims 1-3, wherein at least one interlayer that comprises a channel structure element (9) forms an integral constituent of the contact surface of one of the blocks, or the respective interlayer that takes the form of a channel structure element (9) form integral constituents of the contact sides of the respective blocks.

5. The reactor system for continuous flow reactions according to any of claims 1-4, wherein each reaction channel of a channel structure element (9) has at least two inlets (10, 10'), preferably at least three inlets (10, 10', 10‴) .

6. The reactor system for continuous flow reactions according to any of claims 1-5, wherein at least one sealing layer (8) has a thickness in the range of 0.1-10 mm.

7. The reactor system for continuous flow reactions according to any of claims 1-6, wherein at least one of the interlayers comprises a compressible, viscoelastic or plastic material, the compressible, viscoelastic or plastic material comprising a material from the group of the polymer materials or from the group of the inorganic materials.

8. The reactor system for continuous flow reactions according to any of claims 1-7, wherein the blocks (1, 2) comprise a metallic material selected from the group of copper, brass, aluminum, iron, iron-containing steel, stainless steel, nickel-chromium stainless steel, high-alloy corrosion-resistant stainless steels.

9. The reactor system for continuous flow reactions according to any of claims 1-8, wherein the reaction channel of the channel structure element (9) is filled or coated with catalyst.

10. The reactor system for continuous flow reactions according to any of claims 1-9, integrated into an apparatus for performance of catalytic test reactions, wherein the apparatus comprises a reactant feed for supply of liquids and/or gases, including carrier fluid in the form of liquids and gases, the reactant feed comprises elements from the group of mass flow controller, high-pressure pump, gas saturator.

11. A method of performing catalytic reactions by means of a reactor system according to any of claims 1-10, wherein the method is performed with supply of liquid and/or gaseous reactants in the presence of a solid-state catalyst, the solid-state catalyst being disposed in the form of a film between the sealing element (8) and the channel structure element (9).

12. The method of performing catalytic reactions by means of a reactor system according to claim 11, wherein the reactor system is stored at a temperature in the range of 20-200°C.

13. The method of analyzing catalysts according to either of claims 11 and 12, wherein the method is performed at a pressure in the range of 0.05-300 barg.

14. The method of analyzing catalysts according to any of claims 11-13, wherein the method is performed at a flow rate in the range of 0.05-100 ml/min.

## Revendications

1. Système de réacteur pour réactions d'écoulement, qui comprend au moins deux blocs (1, 2), deux couches intermédiaires (8, 9) et un dispositif de pressage ainsi qu'au moins une conduite d'alimentation (10) et une conduite d'évacuation (11), le premier bloc (1), les couches intermédiaires (8, 9) et le deuxième bloc (2) formant un agencement en forme de pile fixé par le dispositif de pressage et le système de réacteur étant **caractérisé en ce qu'**au moins une couche intermédiaire comprend une couche d'étanchéité (8) et une couche intermédiaire comprend un élément structural de canal (9) contenant un canal de réaction et une feuille catalytique (15) est agencée entre la couche d'étanchéité (8) et l'élément structural de canal (9), le canal de réaction de l'élément structural de canal (9) s'étendant sous forme de méandres et le diamètre du canal de réaction se situant dans la plage de 50-2500 µm et la profondeur du canal de réaction se situant dans la plage de 10-1500 µm et la conduite d'alimentation (10) étant en liaison active avec le côté entrée du canal de réaction et la conduite d'évacuation (11) étant en liaison active avec le côté sortie du canal de réaction et l'agencement en forme de pile étant séparable.

2. Système de réacteur pour réactions d'écoulement selon la revendication 1, **caractérisé en ce qu'**un des blocs présente, sur la face sur laquelle existe le contact avec le contre-bloc, une élévation ou, selon le cas, la forme d'un piston présentant une surface d'extrémité plane et un des blocs présente, sur la face sur laquelle existe le contact avec le contre-bloc, un creux présentant un fond plat et, en présence de l'agencement en forme de pile, l'élévation ou, selon le cas, le piston est positionné (e) dans le creux et les couches intermédiaires (8, 9) sont agencées dans la zone entre la surface d'extrémité du piston et le fond du creux.

3. Système de réacteur pour réactions d'écoulement selon l'une quelconque des revendications 1-2, **caractérisé en ce que** les couches intermédiaires (8, 9) présentent un diamètre qui est situé dans la plage de 0,5-200 cm.

4. Système de réacteur pour réactions d'écoulement selon l'une quelconque des revendications 1-3, **caractérisé en ce qu'**au moins une couche intermédiaire, qui comprend un élément structural de canal (9), forme une partie intégrante de la surface de contact d'un des blocs ou ladite une couche intermédiaire respective, qui est façonnée comme élément structural de canal (9), forment des parties intégrantes des faces de contact des blocs respectifs.

5. Système de réacteur pour réactions d'écoulement selon l'une quelconque des revendications 1-4, **caractérisé en ce que** chaque canal de réaction d'un élément structural de canal (9) présente au moins deux conduites d'alimentation (10, 10'), de préférence au moins trois conduites d'alimentation (10, 10', 10''').

6. Système de réacteur pour réactions d'écoulement selon l'une quelconque des revendications 1-5, **caractérisé en ce qu'**au moins une couche d'étanchéité (8) présente une épaisseur dans la plage de 0,1-10 mm.

7. Système de réacteur pour réactions d'écoulement selon l'une quelconque des revendications 1-6, **caractérisé en ce qu'**au moins l'une des couches intermédiaires contient un matériau compressible, viscoélastique ou plastique, le matériau compressible, viscoélastique ou plastique comprenant un matériau du groupe formé par les matériaux polymères ou du groupe formé par les matériaux inorganiques.

8. Système de réacteur pour réactions d'écoulement selon l'une quelconque des revendications 1-7, **caractérisé en ce que** les blocs (1, 2) comprennent un matériau métallique qui est choisi dans le groupe formé par le cuivre, le laiton, l'aluminium, le fer, l'acier contenant du fer, l'acier inoxydable, l'acier inoxydable contenant du nickel-chrome, les aciers inoxydables hautement alliés résistant à la corrosion.

9. Système de réacteur pour réactions d'écoulement selon l'une quelconque des revendications 1-8, **caractérisé en ce que** le canal de réaction de l'élément structural de canal (9) est rempli de catalyseur ou est revêtu par du catalyseur.

10. Système de réacteur pour réactions d'écoulement selon l'une quelconque des revendications 1-9, qui est intégré dans un appareil pour la réalisation de réactions catalytiques de test, l'appareil comprenant une alimentation en réactifs pour introduire des liquides et/ou des gaz, qui comprennent un fluide support sous forme de liquides et de gaz, l'alimentation en réactifs comprenant des éléments du groupe des régulateurs de débit massique, des pompes haute pression, des saturateurs.

11. Procédé pour la réalisation de réactions catalytiques au moyen d'un système de réacteur selon l'une quelconque des revendications 1-10, le procédé étant **caractérisé en ce qu'**il est réalisé avec introduction de réactifs liquides et/ou gazeux en présence d'un catalyseur solide, le catalyseur solide étant agencé sous forme d'un film entre l'élément d'étanchéité (8) et élément structural de canal (9).

12. Procédé pour la réalisation de réactions catalytiques au moyen d'un système de réacteur selon la revendication 11, le procédé étant **caractérisé en ce que** le système de réacteur est entreposé à une température dans la plage de 20-200°C.

13. Procédé pour étudier des catalyseurs selon l'une quelconque des revendications 11 ou 12, le procédé étant **caractérisé en ce que** le procédé est réalisé à une pression dans la plage de 0,05-300 barg.

14. Procédé pour étudier des catalyseurs selon l'une quelconque des revendications 11-13, le procédé étant **caractérisé en ce que** le procédé est réalisé à un débit dans la plage de 0,05-100 ml/min.
